# EUROPÄISCHE PATENTANMELDUNG

(11) **EP 0 914 930 A1**
(43) Veröffentlichungstag der Anmeldung: **12.05.1999**
(21) Anmeldenummer: 97119559.9
(22) Anmeldetag: 07.11.1997
(51) Int. Cl.: B29C 49/48, B65D 1/40

(54) **Verfahren zur Herstellung von flexiblen Behältern aus thermoplastischen Kunststoffen**

(71) Anmelder: NITTEL GMBH & CO. KG, D-65479 Raunheim (DE)
(72) Erfinder: Nittel, Cornelius, 65193 Wiesbaden (DE)
(74) Vertreter: Schaefer, Gerhard, Dr.

(57) **Zusammenfassung**

Bei einem Verfahren zur Herstellung von flexiblen Behältern aus thermoplastischen Kunststoffen mit rechtwinklig verlaufenden Kanten mittels Tiefzieh- oder Blasverfahren werden die Kanten entgegen ihrer endgültigen Anordnung in das Innere des Behälters eingeformt. Bei der Herstellung von quaderförmigen Behältern werden die Ecken des Quaders nach innen geformt.

## Beschreibung

Die Erfindung betrifft ein Verfahren zur Herstellung von flexiblen Behältern aus thermoplastischen Kunststoffen mit rechtwinklig verlaufenden Kanten mittels Tiefzieh- oder Blasverfahren.

Derartige Verfahren sind seit langem bekannt, und bei der Herstellung kleiner Behälter treten in der Regel keine Probleme auf. Dies gilt auch bei der Herstellung von großen Behältern in kubischer Form bei der Anwendung von Blasform- und Tiefziehverfahren, sofern hierdurch steife Behälter mit großer Wandstärke hergestellt werden. Wird jedoch die Wanddicke minimiert, um dadurch flexible, faltbare Behälter zu formen, treten insbesondere an den Ecken Dünnstellen auf. Dies führt häufig zu Undichtigkeiten, die nicht zugelassen werden können.

Im Blasformverfahren muß versucht werden, den Formkörper aus einem Vorformling aus der Ringdüse des Extruders aufzublasen. Dabei läßt die Wandstärke nur bei günstigen Formverhältnissen eine Minimierung zu. Ansonsten entstehen auch hier Schwachstellen mit der Gefahr der Undichtigkeit. Beim traditionellen Tiefziehen besteht die Möglichkeit, Formstempel einzusetzen. Diese können jedoch nur bei offenen Muldenformen eingesetzt werden.

Bei den sogenannten Twinsheet-Verfahren, wie sie beispielsweise in der EP-A1 0 579 937 beschrieben sind, geschieht die Ausformung in den beiden Formhälften im wesentlichen durch Vakuumeinsatz. Die geschlossene Form läßt Ausformhilfen wie beispielsweise Formstempel nicht zu. Deshalb ist bei größeren Formkörpern die Ziehtiefe begrenzt. Sie ist an den tiefsten Stellen nur mit einer allgemeinen Minimierung der Wandstärke gegenüber anderen Wandbereichen des Behälters zu erreichen. Die Problematik, daß es äußerst schwierig ist, über die Gesamtfläche eines kubischen Behälters eine gleichmäßige Wandstärke zu erhalten, betrifft vor allem die Eckbereiche.

In der DE-A1 40 22 591 ist daher versucht worden, die Schwachstellen wenigstens dadurch zu begrenzen, daß das eingesetzte Folienmaterial mit seiner molekularen Orientierung einer besonders errechneten Krümmung im Bereich der Ecken ausgesetzt wird. Der Scheitelpunkt verbleibt indes auch nur in einer nähernden balligen Eckenausformung und beschränkt sich schon bei kleineren Behältnissen bis maximal 30 l Inhalt aus Sicherheitsgründen auf relativ hohe Wanddicken.

Der Erfindung liegt die Aufgabe zugrunde, vor allem bei größeren Behältern auch bei allgemein geringer Wandstärke des Behälters die Eckenausbildung ausreichend stark auszulegen und dem übrigen Folienbild anzupassen.

Erfindungsgemäß wird dies dadurch erreicht, daß die Kanten entgegen ihrer endgültigen Anordnung in das Innere des Behälters eingeformt werden. Bei der Herstellung quaderförmiger Behälter werden dabei die Ecken des Quaders nach innen geformt. Formtechnisch werden also die Eckbereiche entgegen ihrer Anordnung nach dem Herstellverfahren in der Höhlung des Behälters ausgeformt. Die Ecken können dabei pyramidenförmig ausgebildet sein, wobei die Kanten der Pyramide Abrundungen aufweisen können. Deren Radien können vorzugsweise 10 mm und mehr betragen. Die Kanten können auch generell Krümmungen aufweisen. Die pyramidenförmigen Einbuchtungen werden in der Regel symmetrisch/diagonal in den Hohlraum der Form ausgebildet und mit geeigneten Radien versehen. Die Ecken können auch in der Form von Kugelabschnitten ausgebildet werden, deren Radien 10 mm und mehr betragen können. Der geeignete Radius richtet sich nach der Behältergröße.

Durch das erfindungsgemäße Verfahren wird die Ausbildung der Ecken in die Formmitte verschoben. Dadurch trifft dort mehr ziehfähiges, dickeres Folienmaterial auf den nach innen verlagerten Formkörper. Bei geeigneter Wahl der Übergangszonen in der Formwand ist eine sehr gleichmäßige Verteilung der Folienmasse möglich. Es ist darauf zu achten, daß alle Ecken des Behälters in gleicher Weise ausgebildet sind und daß der Krümmungsradius der Flächen, die bei dem nach innen angelegten Eckbereich entstehen, im wesentlichen den gleichen Krümmungsradius haben.

Nach der Entformung wird durch Ausstülpen der Ecken die eigentliche Behälterform erhalten. Der gesamte erfindungsgemäß hergestellte Behälter einschließlich seiner Eckbereiche hat eine im wesentlichen gleichmäßige Wandstärke. Damit wird erreicht, daß beim Verfahren der Zulassung für den Transport von Flüssigkeiten gemäß UN-Normen auf Schiene, Straße und See keinerlei Problem auftreten.

Das erfindungsgemäße Verfahren eignet sich für die Herstellung von Behältern beliebiger Größe. Es ist jedoch besonders für die Herstellung von großen Behältern geeignet, insbesondere von Behältern mit mehr als 50 l Inhalt, vorzugsweise mit mehr als 100 l Inhalt. Die Behälter können für den Transport insbesondere von Flüssigkeiten oder Pulvern in einer stützenden Umhüllung, aber auch ohne eine solche verwendet werden. Ganz besonders geeignet ist das Verfahren für die Herstellung von flexiblen Kunststoffbehältern, die in falt- und klappbaren Palettencontainern eingestellt werden und flüssige Produkte lagern und transportieren. Als Umhüllung kommen in bekannter Weise kartonartige Gebilde wie auch aus Holz, Metall oder festem Kunststoff bestehende Gerüste oder dergleichen in Frage. Eine Umhüllung aus gewebtem Polypropylenmaterial (FIBC) ist ebenso einsetzbar.

Mit dem erfindungsgemäßen Verfahren lassen sich auch die Kanten zylindrischer Behälter in entsprechender Weise ausformen.

Weitere Einzelheiten und Vorteile der Erfindung können dem in der Zeichnung dargestellten Ausführungsbeispiel entnommen werden. Es zeigen:
- Fig. 1: eine Seitenansicht eines erfindungsgemäß hergestellten Behälters;
- Fig. 2: eine Draufsicht auf den Behälter nach Fig. 1;
- Fig. 3: eine vergrößerte Ansicht der in Fig. 1 kreisförmig markierten Ecke;
- Fig. 4: eine der Fig. 3 entsprechende Ausbildung einer Ecke eines anderen Behälters;
- Fig. 5: eine weitere Ausbildungsform einer Ecke sowie der zugehörige Einsatz in eine Ziehform.

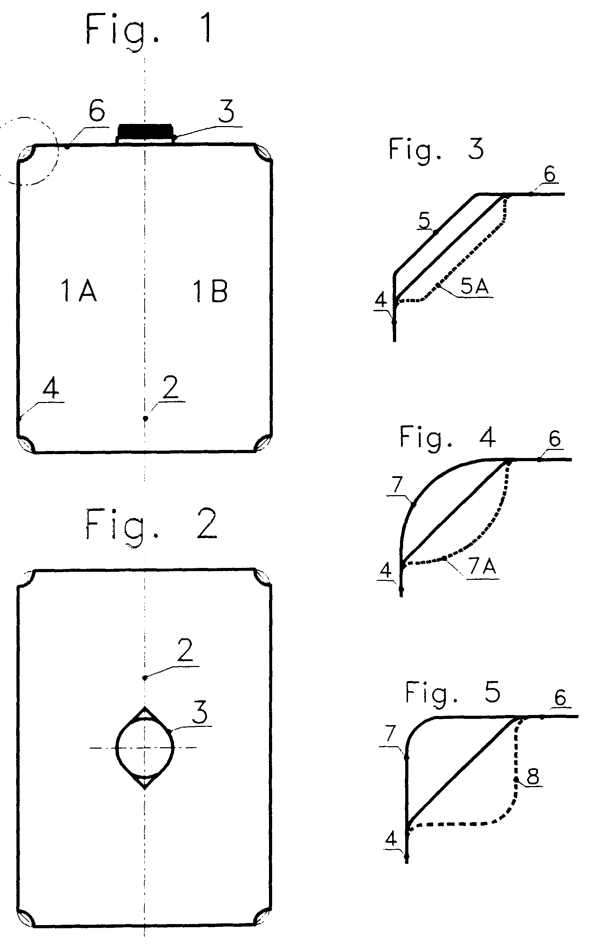

Der in den Fig. 1 und 2 dargestellte Behälter 1 ist nach dem sogenannten Twinsheet-Verfahren durch Tiefziehen zweier thermoplastischer Folien mittels Druckdifferenz in bekannter Weise hergestellt. Bei diesem Verfahren wird die Nahtstelle 2 der beiden Hälften 1A und 1B des Behälters 1 nach dem Tiefziehvorgang thermoplastisch verschweißt. In die obere Fläche des Behälters 1 ist mindestens ein Einlegeteil 3 eingesetzt, durch das die Befüllung des Behälters 1 vorgenommen werden kann. Das Einlegeteil 3 kann als Einfüllstutzen mit Gewinde ausgebildet sein. Entsprechende Teile können auf der Oberseite des Behälters als Be- und Entlüftungsöffnungen sowie im Bodenteil als Auslaufstutzen eingesetzt sein. Der dargestellte Behälter, der für Versuchszwecke verwendet wurde, war quaderförmig ausgebildet und hatte einen Inhalt von 750 l. Seine Länge betrug 1080 mm, seine Breite 930 mm und seine Höhe 765 mm. Das Gewicht dieses Behälters betrug 4,5 kg, seine minimale Wandstärke betrug 0,4 mm. Als Werkstoff diente LDPE.

Die erfindungswesentliche Ausbildung der acht Ecken eines solchen Behälters soll nun im folgenden beschrieben werden. Die in Fig. 1 kreisförmig markierte obere Ecke ist vergrößert in Fig. 3 dargestellt. Dieser ist zu entnehmen, daß die senkrecht nach oben verlaufende Kante 4 des Behälters 1 im Bereich der Ecke in Form einer ebenen Fläche 5 abgeflacht ist, an die sich die Kante 6 der oberen Fläche des Behälters anschließt. Bei der Herstellung des Behälters wird diese abgeflachte Kante 5 in der durch das Bezugszeichen 5A bezeichneten Form nach innen gezogen und erst nach der thermoplastischen Verbindung beider Behälterhälften 1A und 1B und der Entnahme aus der Herstellungsform in die endgültige Form gebracht.

Fig. 4 zeigt eine andere Ausführungsform für die Ausbildung der Ecken eines Behälters. Diese hat die Form eines Kugelabschnitts, der von der durch die Flächen 4 und 6 gebildeten Kante bei der Herstellung gemäß der Fläche 7A nach innen gezogen wird und erst danach nach außen in die endgültige mit der Ziffer 7 bezeichnete Form gebracht wird.

Fig. 5 zeigt eine Fig. 4 entsprechende Ausführungsform zusammen mit dem bei der Herstellung des Behälters in die Ecken der Tiefziehform eingelegten Formteils 8.

## Patentansprüche

1. Verfahren zur Herstellung von flexiblen Behältern aus thermoplastischen Kunststoffen mit rechtwinklig verlaufenden Kanten mittels Tiefzieh- oder Blasverfahren, **dadurch gekennzeichnet,** daß die Kanten entgegen ihrer endgültigen Anordnung in das Innere des Behälters eingeformt werden.

2. Verfahren nach Anspruch 1 zur Herstellung von quaderförmigen Behältern, dadurch gekennzeichnet, daß die Ecken des Quaders nach innen geformt werden.

3. Verfahren nach Anspruch 2, dadurch gekennzeichnet, daß die Ecken pyramidenförmig ausgeformt werden.

4. Verfahren nach Anspruch 3, dadurch gekennzeichnet, daß die Kanten der pyramidenförmigen Ausformung abgerundet und/oder abgeflacht sind.

5. Verfahren nach Anspruch 4, dadurch gekennzeichnet, daß die Radien der pyramidenförmigen Ausformung gleich oder größer 10 mm sind.

6. Verfahren nach Anspruch 2, dadurch gekennzeichnet, daß die Ecken in Form von Kugelabschnitten ausgebildet werden.

7. Verfahren nach Anspruch 6, dadurch gekennzeichnet, daß die Radien der Kugelabschnitte gleich oder größer 10 mm sind.

8. Verfahren nach einem der vorhergehenden Ansprüche, dadurch gekennzeichnet, daß der Behälter im Tiefziehverfahren aus einer Doppelfolie aus thermoplastischem Kunststoff hergestellt wird, deren Ränder vorzugsweise thermisch miteinander verbunden werden.

9. Flexibler Behälter aus thermoplastischem Kunststoff mit rechtwinklig verlaufenden Kanten, hergestellt mittels Tiefzieh- oder Blasverfahren, **dadurch gekennzeichnet, daß** die Kanten entgegen ihrer endgültigen Anordnung in das Innere des Behälters eingeformt sind.

10. Behälter nach Anspruch 9, dadurch gekennzeichnet, daß bei quaderförmiger Form die Ecken des Quaders nach innen geformt sind.

11. Behälter nach Anspruch 10, dadurch gekennzeichnet, daß die Ecken pyramidenförmig ausgeformt sind.

12. Behälter nach Anspruch 11, dadurch gekennzeichnet, daß die Kanten der pyramidenförmigen Ausformung abgerundet und/oder abgeflacht sind.

13. Behälter nach Anspruch 12, dadurch gekennzeichnet, daß die Radien der pyramidenförmigen Ausformung gleich oder größer 10 mm sind.

14. Behälter nach Anspruch 10, dadurch gekennzeichnet, daß die Ecken in Form von Kugelabschnitten ausgebildet sind.

15. Behälter nach einem der Ansprüche 9 bis 14, dadurch gekennzeichnet, daß die Stärke der Wände auch im Bereich der Ecken weitgehend gleich ist.
